Europäisches Patentamt

European Patent Office

Office européen des brevets

(19)

(11) Publication number: **0 006 830**
**A1**

## EUROPEAN PATENT APPLICATION

(12)

(21) Application number: 79810059.0

(22) Date of filing: 03.07.79

(51) Int. Cl.³: **E 03 B 3/18**

(30) Priority: 04.07.78 TR 59374/78

(43) Date of publication of application: 09.01.80
Bulletin 80/1

(84) Designated Contracting States: **AT BE CH DE FR GB IT LU NL SE**

(71) Applicant: **GÖKTEPE PLASTIK SANAYII ve TICARET ANONIM SIRKETI, Cumhuriyet Bulvari, No 47, Izmir (TR)**

(72) Inventor: **Göktepe, Abdullah Necdet, Mithatpasa Caddesi, No. 1160/1, Izmir (TR)**

(74) Representative: **Reverdin, André Pierre et al, Prof. Konst. Katzarov SA 143, rue de Lausanne, CH-1202 Geneva (CH)**

(54) Plastic well screen and its connection system.

(57) A well screen element comprising in the walls of it three holes (2) for connecting the elements each other, rings (3) to provide the precise centering ans screen openings (1) are in (V) shape with the wide end of them are directed inside of the element and their numbers and height are so adjusted to provide a larger filtration surface, and a well casing pipe (10) of any length comprising, where it is connected to the well screen elements, six connection bolts (6), a guide bolt (4), guide openings (5), screen bottom piece (9), three connecting rods on the outer periphery, and having well screen elements are necessary numbers at the locations under the ground depending the level(s) of underground water.

EP 0 006 830 A1

Plastic well screen and its connection system

This invention relates to a well screen and its connection system.

In this invention the well screen made of plastic is used to filter the water in the wells and collect the ground water. Connection system will facilitate the pipe connection and disconnection.

Known in the prior art in the deep wells and pipes made of steel, closed and screened are used.

The weight of the steel pipes are however changeable depending on their diameter and length, still the density of the pipes being 7,8 $kg/dm^3$ creates problems in transport and their attachment. Pipes are connected by welding, when it is required to disconnect it is necessary to cut the pipes from welded points. These processes are accomplished with a diesel generator set and it is time consuming. However, the wells opened by drilling rods are easily collapsible so attachment of the pipes must be carried out quickly. In the screened pipes, the screen openings are prepared either when material is flat or made up to pipe. The screen openings prepared on the flat plate will close at the inside and open at the outside while the production of pipe. In this way the opening will be wide at the outside and narrow inside. The openings prepared on pipe will

- 2 -                                    0006830

have parallel two surfaces.  On the other hand, the opening width will depend on the thickness of cutting tools ,
and will have certain value.

Whichever production system of the above method is used,
the sand particles coming with water will stick to the
openings and in time will reduce the screening area and
sometimes in sandy places will result in complete clogging of the openings.

The mineral salts present in the water will also in time
result in clogging of the openings.

It is well known that that the iron material is effected
by the acidic or basic soils.  The acidic or basic media
effected on iron material results in corrosion. On the
other hand the pipe being in contact with water continuously at the inside certainly will result in corrosion.
For this reason the working life of steel pipes are known
to be 10 to 15 years.  At the end of this life or the
collapse of the well for the same reason, it is necessary
to open a new well and equip it with pipe.  In the steel
pipes, the total screen area proportion to total pipe surface area is generally remains to a low value, such as at
20%.

The closed pipes or well screened pipes made of plastic are
light because of the low density and it is easy to transport and attach to each other.

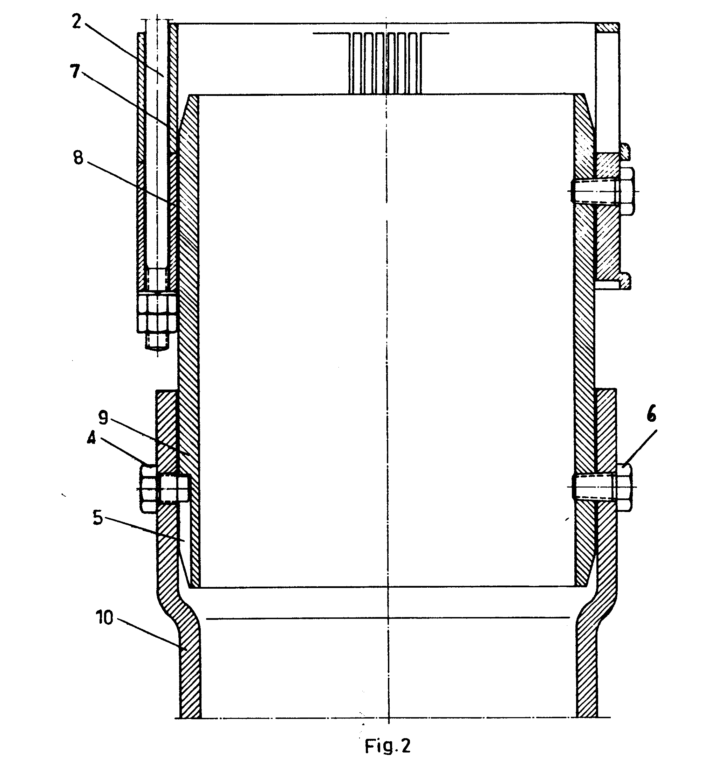

As seen in the Figure 2, the connection of the pipes are
realised by peripherical 6 bolts.  These bolts are thick
and specially threaded and conical.  The connection of the
pipes are realised with the easy advance of the bolts into

- 3 -                          0006830

the holes on the pipes.  To disconnect the pipes, the bolts
are removed.  This process does not need a speciality and
is carried out in a short time so the pipes are put into
place in deep wells long before any collapse occurs in
the well walls.

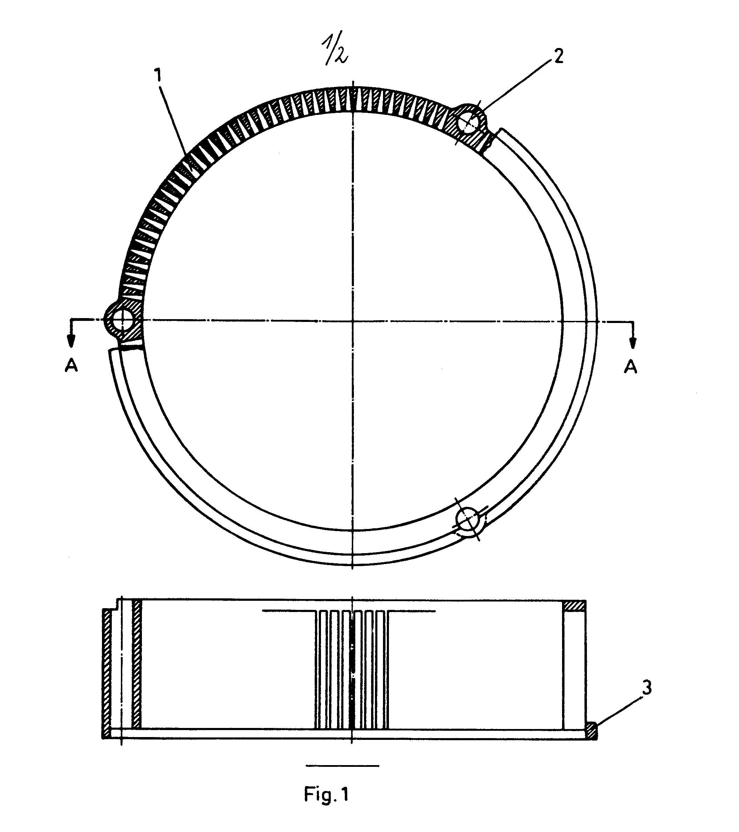

The pipes with plastic screens are formed by connecting the·
element shown in Figure 1.  This element being made by molding the surfaces are smooth and they are all similar.

Screen openings width are 1 or 2 or 3 mm at the outside and
3 or 4 or 5 mm at the inside are in V shape and different
dimensions.  That is the narrow end of the opening is at the
outside of the pipe.  In this type of opening, when the sand
comes with water passes the opening being wide inside falls
into the pipe and without clogging goes into the well.
So the screen openings will never clog with the sand particles.
On the other hand, the production of openings with different
dimensions will facilitate a choice for use with different
sand particles on the well.

In this type of well screen having smooth surfaces and generally being durable to acidic and basic media, the chemical
substances will not accumulate around the openings and so will
cause clogging of the screens.

This property and not oxidizing properties of plastics will
result a long life of the pipes in the soil.  Theoretically
they have infinite working life although in calculations the
working life has been taken 50 years.  As it seen it has
three times the life of the steel pipes.

In this type of well screen the proportion of the total opening surface area to total surface  area is proportional of the opening width, but it is minimum 2C%. For this reason it is possible to filter more water than prior art.

As it seen in the figures, the pipes is made up by putting the screens on top of each other. It is possible to make a pipe in required length by replacing the screen elements on three rods passing through the three holes arranged peripherially.

The main object of this invention is to provide a well screen element and its connection system, easily and quickly connectable and disconnectable with larger screening surface area and with longer life.

Explanation of the Figures

1) - V shaped screen opening widening from outside towards inside so preventing the clogging.
2) - Well screen is formed by elements. Connection is made by three rods passing through three holes.

3) - A ring, to provide the centering of pipe connection and being on each element.

4) - A bolt which is used as guide in connecting the screens.
5) - An opening which is opened on the male end of the pipe where the guide bolt goes through.
6) - Periphery placed six bolts used for connection.
7) - Screen element
8) - Screen connection
9)- Screen bottom piece
10)- Casing pipe

A. Reverdin

c/o Prof. Konst. KATZAROV S.A.

- 1 -

0006830

Claims:

1. A well screen element comprising in the walls of it three holes for connecting the elements each other, rings to provide the precise centering and screen openings characterized in that the openings are in the V shape with the wide end of them directed inside of the element and in that their numbers and height are so adjusted to provide a larger filtration surface.

2. A well casing pipe of any length comprising, where it is in connection to the well screen elements of Claim 1, six connection bolts, a guide bolt, guide openings, screen bottom piece, three connecting rods on the outer periphery, and having well screen elements of Claim 1 in necessary numbers at the locations under the ground depending the level(s) of underground water.

A. Reverdin

c/o Prof. Konst. KATZAROV S.A.

½

Fig. 1

A. Reverdin

c/o Nuur

2/2

Fig.2

A. Reverdin
c/o

0006830

**European Patent Office**

**EUROPEAN SEARCH REPORT**

Application number

EP 79 810 059.0

| Category | Citation of document with indication, where appropriate, of relevant passages | Relevant to claim |
|---|---|---|
| | DE - C - 1 136 648 (FA. OTTO BOSSE) <br> * claims 5 and 7; fig. 5 * | 1,2 |
| | --- | |
| | DE- U - 1 749 998 (CONRAD STÜKER-JÜRGEN) <br> * whole document * | 1 |
| | --- | |
| | DE - C - 370 368 (ALBERT FAHSOLD) <br> * lines 60 to 67; fig. 1, 2 * | 1 |
| | --- | |
| | DE - U - 1 863 186 (HERBERT BARG) <br> * page 4 to page 5, paragraph 1; fig. 1 * | 1 |
| | --- | |
| | US - A - 3 822 744 (REIJONEN et al.) <br> * column 2, lines 25 to 47 * | 1 |
| | --- | |
| | CH - A - 244 292 (MÖSCH et al.) <br><br> * fig. 1 to 4 * | 2 |
| | ----- | |

**DOCUMENTS CONSIDERED TO BE RELEVANT**

**CLASSIFICATION OF THE APPLICATION (Int. Cl.3)**

E 03 B    3/18

**TECHNICAL FIELDS SEARCHED (Int.Cl.3)**

E 03 B    3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 18-09-1979 | PAETZEL |

EPO Form 1503.1  06.78